# EUROPEAN PATENT SPECIFICATION

(11) **EP 3 060 349 B1**
(45) Date of publication and mention of the grant of the patent: **02.10.2019**
(21) Application number: 14799501.3
(22) Date of filing: 23.10.2014
(51) Int. Cl.: B01D 21/00, B03D 1/14, B03D 1/20, B01F 3/04

(54) **STATOR FOR FROTH FLOTATION**
STATOR FÜR SCHAUMFLOTATION
STATOR POUR FLOTTATION PAR MOUSSE

(30) Priority: 25.10.2013 FI 20136049
(43) Date of publication of application: 31.08.2016
(73) Proprietor: Outotec (Finland) Oy, 02230 Espoo (FI)
(72) Inventor: XIA, Jiliang, FI-28300 Pori (FI); RINNE, Antti, FI-02100 Espoo (FI)
(74) Representative: Papula Oy
(86) International application number: PCT/FI2014/050800
(87) International publication number: WO 2015/059360

(56) References cited:
- EP-A2- 0 092 769
- EP-A2- 0 287 251
- WO-A2-2012/090167
- US-A- 3 984 001
- US-A- 5 244 097
- US-A1- 2004 129 621

## Description

### Field of the invention:

The invention relates to the froth flotation in mineral processing. The invention relates particularly to a stator for a froth flotation tank.

### BACKGROUND OF THE INVENTION

Froth flotation is a process used in the refining of various metals. The purpose of froth flotation is to separate a desired mineral from undesired minerals of an ore referred to as gangue. The desired mineral is referred to as a valuable mineral. The froth flotation relies on the physical phenomena of hydrophobicity and selective surface wetting. Hydrophobicity means the property of a molecule to be repelled from a mass of water. In froth flotation bodies extracted from an ore are crushed and milled to yield a dust of small particles having a size ranging, for example, from 0.1 mm to 5 µm. The dust of small particles is mixed with water and wetted using a wetting agent which selectively wets exposed surfaces of the valuable mineral in particles. In the process of wetting molecules of the wetting agent attach to the exposed surfaces of the valuable mineral. The wetting agent may be referred to as a surfactant. The wetting agent has a molecular structure that causes a hydrophobic surface to be formed over the wetted surfaces of the valuable mineral. The mixing and wetting produce slurry. The slurry is introduced to a flotation tank. In the tank the slurry is agitated and aerated. In the process of aeration, particles having a wetted hydrophobic surface become attached to surfaces of air bubbles. The air bubbles rise to the surface of the tank and form froth. The froth is collected from the surface of the tank and provided to a laundering process. The gangue remaining at the bottom of the tank is allowed to flow to a neighboring tank where it is collected for further processing. The aeration and agitation are achieved by means of a rotor and a stator installed near the bottom of the tank. A flow of air is provided below the rotor, which causes the formation of air pockets in the rotor. Rotation of the rotator causes air to flow towards outer edges of rotor blades. From the rotor blade edges the air flows to stator blades which results in formation of bubbles from the air.

Document US 3984001 A discloses a bubble dispersing apparatus that comprises a rotary shaft, stirring blades fixed onto a plate installed on the lower part of the rotary shaft, and guide blades surrounding the rotation zone of the stirring blades. A frame encloses the construction, preventing slurry flow other than directly through the blades, i.e. radially from the bubble dispersing apparatus. The documents EP 0092769 A2, EP 0287251 A2 and U S2004 129621 A1 disclose a rotor-stator pump assembly wherein a rotor body comprises blades and top plate members forming a gas chamber in the upper part of the rotor. To disperse flotation gas into the slurry, a gas stream is discharged from the gas chamber in a transverse direction, flowing in gas pockets along surfaces of moving blades.

The effectiveness of the froth flotation depends on the rate and amount of bubble production in the slurry. With increased efficiency of air bubble formation it is possible to form more forth from the slurry. With better forth formation there is less need for circulating slurry via several forth flotation tanks before a desired amount of valuable mineral is obtained from an amount of slurry.

The problems in prior art solutions include high power consumption and hence high operating cost. There is a need for increased pumping capacity. Similarly, existing rotor and stator arrangements are not effective when sizes of the tanks used for flotation vary.

Another problem in prior art solutions is stator weight. A heavy stator may require sturdy supports for the stator in a flotation tank. Sturdy supports may restrict flow of slurry into an interior space below the stator defined by the supports.

### SUMMARY OF THE INVENTION:

According to an aspect of the invention, the invention is a stator of a gas dispersion mechanism to be used in a froth flotation tank, the stator comprising: an annular top plate having an inner circumference; an annular array comprising a plurality of radial stator blades, each stator blade having an inner edge and an outer edge, the inner edges of the stator blades defining an interior space for a rotor, inner edges of at least two stator blades of the plurality of stator blades defining an inner circumference of the annular array, the at least two stator blades having innermost inner edges among the plurality of stator blades, the annular array being disposed below the annular top plate and being coaxial with the annular top plate; and an annular bottom plate disposed below the annular array, the annular bottom plate being coaxial with the annular array, the annular bottom plate having an inner circumference, the inner circumference of the annular bottom plate having a radius which is smaller than a radius of the inner circumference of the annular array, the difference between the radius of the inner circumference of the annular bottom plate and radius of the inner circumference of the annular array forming a flow guide for guiding a flow of slurry towards an axis of the annular bottom plate; and the stator comprises a cylindrical member disposed between the annular array and the annular bottom plate, the cylindrical member being coaxial with the annular array and having a height from 50% to 150% of a height of the annular array.

According to another aspect of the invention, the invention is a rotor-stator assembly of a gas dispersion mechanism to be used in a froth flotation tank, the rotor-stator assembly comprising: a stator comprising an annular top plate having an inner circumference, an annular array comprising a plurality of radial stator blades, each stator blade having an inner edge and an outer edge, the inner edges of the stator blades defining an interior space for a rotor, inner edges of at least two stator blades of the plurality of stator blades defining an inner circumference of the annular array, the at least two stator blades having innermost inner edges among the plurality of stator blades, the annular array being disposed below the annular top plate and being coaxial with the annular top plate, and an annular bottom plate disposed below the annular array, the annular bottom plate being coaxial with the annular array, the annular bottom plate having an inner circumference, the inner circumference of the annular bottom plate having a radius which is smaller than a radius of the inner circumference of the annular array, the difference between the radius of the inner circumference of the annular bottom plate and radius of the inner circumference of the annular array forming a flow guide for guiding a flow of slurry towards an axis of the annular bottom plate; and the stator comprises a cylindrical member disposed between the annular array and the annular bottom plate, the cylindrical member being coaxial with the annular array and having a height from 50% to 150% of a height of the annular array; and a rotor comprising a plurality of rotor blades defining an interior space of the rotor, the rotor comprising an rotor top plate having an aperture for gas supply to the interior space, the rotor top plate being disposed above the plurality of rotor blades, the rotor being coaxial with the annular top plate, the rotor being positioned to protrude a depth from an opening formed by the inner circumference of the annular bottom plate.

According to another aspect of the invention, the invention is a froth flotation tank comprising the rotor-stator assembly.

In one embodiment of the invention, the at least two stator blades, the inner edges of which define the inner circumference of the annular array have innermost inner edges among the plurality of stator blades in the annular array of stator blades.

In one embodiment of the invention, the annular array comprises a plurality of stator blades, the annular array has an inner circumference and an outer circumference and the plurality of stator blades extend radially from the inner circumference of the annular array to the outer circumference of the annular array. The inner edges of the stator blades may define the inner circumference. The outer edges of the stator blades may define the outer circumference.

In one embodiment of the invention, the inner circumference of the annular array is substantially similar to the inner circumference of the cylindrical member.

In one embodiment of the invention, the outer circumference of the annular array is substantially similar to the outer circumference of the cylindrical member.

In one embodiment of the invention, a radius of the outer circumference of the annular top plate is from 20% to 45% larger than a radius of the outer circumference of the annular array.

In one embodiment of the invention, a thickness of stator blades decreases in radial direction from a maximum thickness at the inner circumference of the annular array to a minimum thickness at the outer circumference of the annular array.

In one embodiment of the invention, the stator blades have a rectangular edge facing an axis of the annular array.

In one embodiment of the invention, the stator depends from a superstructure of the froth flotation tank.

In one embodiment of the invention, the stator is mounted on a plurality of support bars standing on a bottom of the froth flotation tank.

In one embodiment of the invention, a width of the flow guide is from 20% to 80% of the width of the annular array.

In one embodiment of the invention, the rotor comprises an annular collar for an inward flow of slurry, the annular collar being disposed below the plurality of rotor blades.

In one embodiment of the invention, the depth of protrusion is from 5% to 50% of a height of the rotor.

In one embodiment of the invention, the depth of protrusion is from 5% to 30% of a height of the rotor.

In one embodiment of the invention, the depth of protrusion is from 5% to 20% of a height of the rotor.

The embodiments of the invention described hereinbefore may be used in any combination with each other. At least two of the embodiments may be combined together to form a further embodiment of the invention. A stator, a rotor-stator assembly or a flotation tank to which the invention is related may comprise at least one of the embodiments of the invention described hereinbefore.

It is to be understood that any of the above embodiments or modifications can be applied singly or in combination to the respective aspects to which they refer, unless they are explicitly stated as excluding alternatives.

The benefits of the present invention relate to improved suction of a rotor-stator assembly in a froth flotation tank and thereby enhanced pumping capacity and reduced energy consumption in froth flotation tanks.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1A** illustrates a stator according to an embodiment of the invention;
**Fig. 1B** illustrates a top view of the stator of Fig. 1A;
**Fig. 1C** illustrates a lateral section view of the stator of Fig. 1A and 1B;
**Fig. 2A** illustrates a stator according to an embodiment of the invention;
**Fig. 2B** illustrates a top view of the stator of Fig. 2A;
**Fig. 2C** illustrates a lateral section view of the stator of Fig. 2A and 2B;
**Fig. 3** illustrates a rotor in one embodiment of the invention;
**Fig. 4** illustrates a rotor and stator arrangement in one embodiment of the invention;
**Fig. 5A** illustrates a rotor-stator assembly in one embodiment of the invention;
**Fig. 5B** illustrates a rotor-stator assembly in one embodiment of the invention; and
**Fig. 6** illustrates a flotation tank comprising a stator according to an embodiment of the invention.

### DETAILED DESCRIPTION OF THE INVENTION

Reference will now be made in detail to the embodiments of the present invention, examples of which are illustrated in the accompanying drawings.

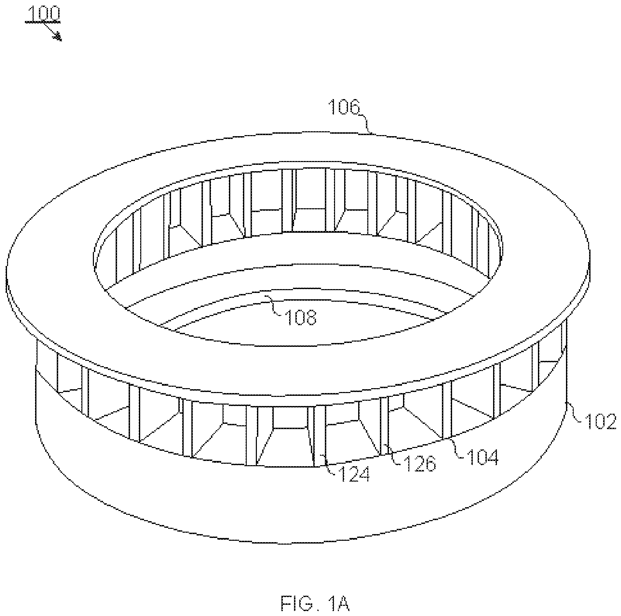

Figure 1A illustrates a stator in one embodiment of the invention.

In Figure 1A there is a stator 100. The stator comprises an annular top plate 106. To the bottom of annular top plate 106 there is fixed an annular array 104 of stator blades such as stator blade 124 and stator blade 126. Stator blades in the annular array 104 extend transversely and radially from an inner circumference to an outer circumference of the annular array 104. Annular array is mounted on a cylindrical member 102. Cylindrical member 102 has an inner circumference which may be smaller than the inner circumference of annular array 104. In one embodiment of the invention, cylindrical member 102 has an inner circumference which is equal to the inner circumference of annular array 104. Cylindrical member 102 has an outer circumference which may be larger than the outer circumference than the outer circumference of annular array 104. In one embodiment of the invention, cylindrical member 102 has an outer circumference which is equal to the outer circumference of annular array 104. Cylindrical member 102 is mounted on an annular bottom plate 108. Inner circumference of annular bottom plate 108 may be smaller than the inner circumference of cylindrical member 102. Annular array 104 of stator blades and cylindrical member 102 define an interior space for a rotor (not shown). Height of annular array 104 may be substantially equal to cylindrical member 102. Height of annular array 104 may be 75% to 125% of the height of cylindrical member 102. In one embodiment of the invention, the height of annular array 104 is substantially half of the height of stator 100.

In one embodiment of the invention, annular top plate 106, annular array 104 of stator blades and annular bottom plate 108 are integrated. The integration may comprise at least one welding, securing or attaching with bolts or screws and molding.

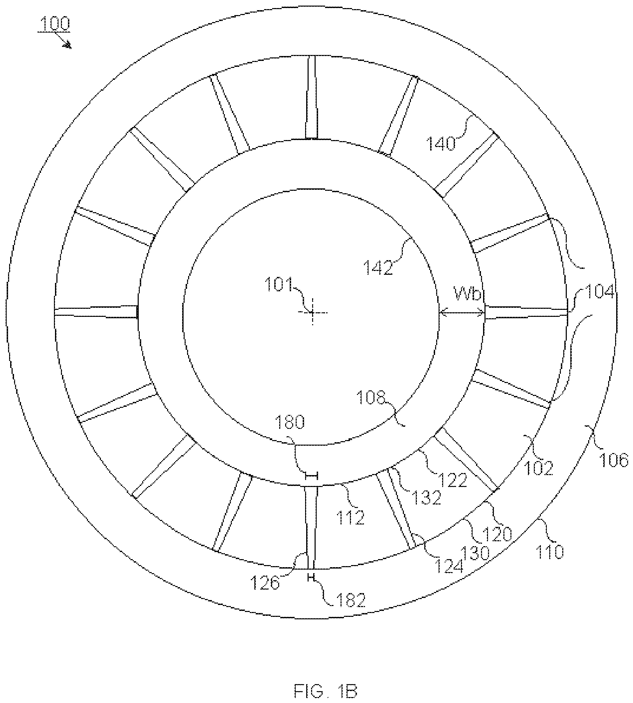

Figure 1B illustrates the stator 100 of Figure 1A as seen from above in one embodiment of the invention. In Figure 1B annular array 104 is illustrated as exposed so that the portion of annular top plate 106 covering annular array 104 is not shown. However, still the actual inner circumference of annular top plate 106 is the same as in any of the embodiments described in Figure 1A. Annular top plate 106 has an outer circumference 110 and an inner circumference 112. In Figure 1B there is illustrated annular array 104 which consists of stator blades such as stator blade 124 and 126. Annular array 104 of stator blades has an outer circumference 120 and an inner circumference 122. Outer circumference 110 of annular top plate 106 may extend outer circumference 120 of annular array 104 by one quarter to one third of the width of annular array 104. The protrusion of annular top plate 106 in relation to outer circumference 120 of annular array 104 may be in the range of 50 mm to 120 mm depending on the size of the flotation tank in which stator 100 is installed. The larger the flotation tank, the larger the protrusion. The width of annular top plate is thus the width of annular array 104 plus the width of the protrusion. Stator blades in annular array 104 extend radially outwards in relation to longitudinal axis 101 of stator 100. Stator blades extend radially outwards from an inner circumference 122 of annular array 104 to an outer circumference 120 of annular array 104. In annular array 104 stator blades may be circumferentially equally spaced. The number and width of stator blades in annular array 104 may vary depending on the size of the flotation tank into which stator 100 is designed to be installed. The thickness of a stator blade in annular array 104 may vary from 30 mm to 60 mm. The thicknesses of stator blades may be increased depending on the slurry load in the flotation tank in which stator 100 designed to be installed. Top surfaces of blades in annular array 104 are fixed to annular top plate 106, for example, so that inner circumference 122 of annular array 104 and inner circumference 112 of annular top plate 106 are aligned. The fixing may be by means of welding. Blades in annular array 104 may be secured to annular top plate 106 with bolts. Bottom surfaces of blades in annular array 104 are fixed to the top of cylindrical member 102. The fixing may be by means of welding. Blades in annular array 104 may be secured to cylindrical member 102 with bolts. Cylindrical member 102 has an outer circumference 130 and an inner circumference 132. Cylindrical member 102 may have a hollow structure and have in inner wall corresponding to inner circumference 132 and an outer wall corresponding to outer circumference 130. The inner and outer wall of cylindrical member 102 may be mutually connected with annular top and bottom plates (not shown) and possible other connecting means (not shown). Outer circumference 130 of cylindrical member 102 may be aligned with outer circumference 120 of annular array 104. Inner circumference 132 of cylindrical member 102 may be aligned with inner circumference 122 of annular array 104. Annular bottom plate 108 has in inner circumference 142 and an outer circumference 140.

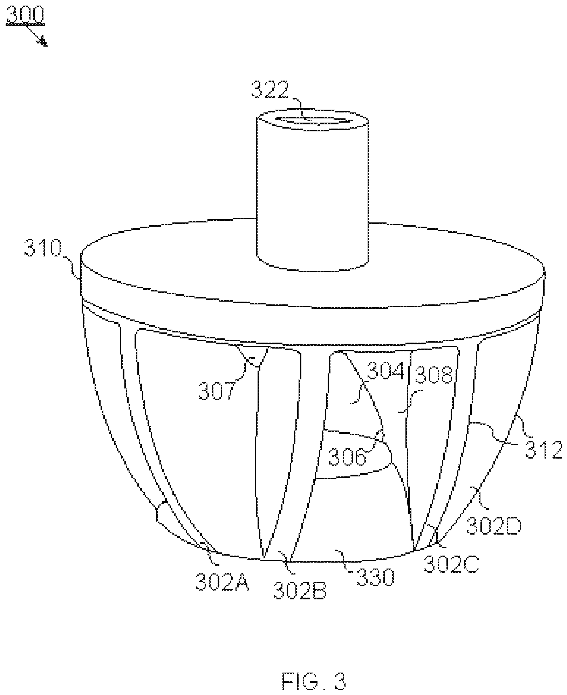

When stator 100 is installed into a flotation tank, an opening defined by inner circumference 142 of annular bottom plate 108 guides slurry into the interior space defined by annular array 204 where a rotor such as rotor 300 in Figure 3 may be suspended or otherwise mounted.

In one embodiment of the invention, inner circumference 132 of cylindrical member 102 is larger than inner circumference 142 of annular bottom plate 108. A difference between inner circumference 132 of cylindrical member 102 and inner circumference 142 of annular bottom plate 108 is referred to with numeral Wb. The extension of annular bottom plate 108 radially towards axis 101 by width Wb may be referred to as flow adjustor. Therefore, inner circumference 142 of annular bottom plate 108 is smaller than inner circumference 132 of cylindrical member 102. The width Wb may be between 50% and 300% of the length of stator blades in radial direction from inner circumference 122 to outer circumference 120 of annular array 104. The benefit of flow adjustor is to guide slurry into the region of a rotor such as rotor 300 in Figure 3 and to change flow field around the rotor and stator 100 for better mixing and gas dispersion. The effectiveness of suction from opening formed by inner circumference 142 of annular bottom plate into rotor is enhanced. Furthermore, pumping capacity is increased because of enhanced suction intensity. The flow adjustor enhances turbulence in a low region of a flotation tank in which stator 100 is installed. As a result, the mixing and bubble dispersion efficiency is improved. The idea of flow adjustor changes flow pattern and fluid kinetics around stator 100 and a rotor installed in interior region of stator 100.

Cylindrical member 102 induces an additional vortex around a bottom region of the flotation tank in which stator 100 may be installed. Cylindrical member 102 also enhances turbulence in a lower region of the flotation tank in which stator 100 may be installed.

Stator blades in annular array 104 subdue swirling flow produced by a rotor thereby forming jet flows in radial direction away from stator 100 and toward the wall in the flotation tank in which stator 100 may be installed. This creates favorable conditions for air bubble dispersion and mixing.

The protrusion of annular top plate 106 in relation to outer circumference 120 of annular array of stator blades is to guide air-slurry mixture horizontally in the radial direction away from stator 100 and to avoid undesired upward flow, which would disturb froth in the froth layer.

In one embodiment of the invention, stator blades in annular array 104 are thicker at inner circumference 122 of annular array 104 facing axis 101 than at outer circumference 122 facing away from axis 101. The thicknesses of stator blades at the inner circumference 122 of annular array 104 are illustrated with line 180. The thicknesses of stator blades at the outer circumference of annular array 104 are illustrated with line 182. The difference in the thickness of each stator blade makes the blades stronger at an interior space defined by inner circumference 122 of annular array 104. The flurry currents to which flanks of the blades are subjected to are stronger closer to the interior space.

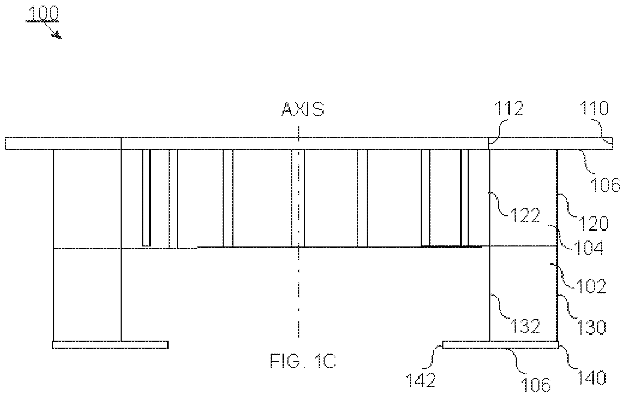

Figure 1C illustrates a lateral section view of stator 100 of Figure 1A and Figure 1B.

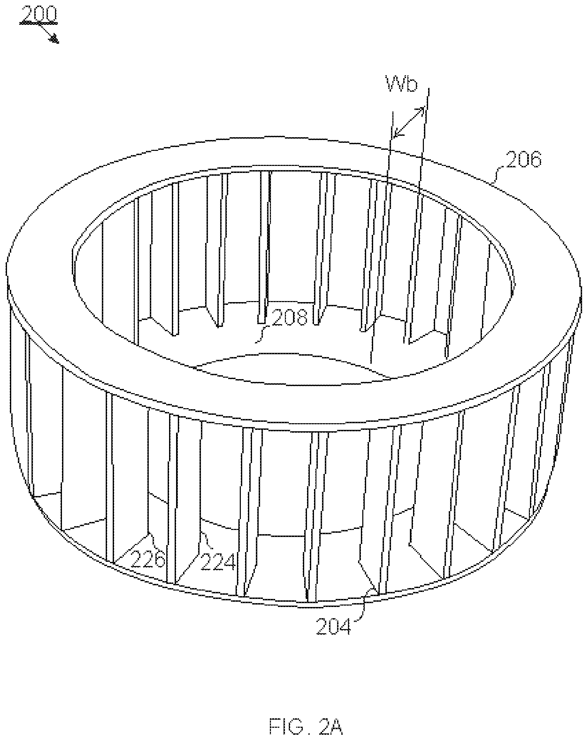

Figure 2A illustrates a stator according to an embodiment of the invention.

In Figure 2A there is a stator 200. Stator 200 comprises an annular top plate 206. To annular top plate 206 is fixed an annular array 204 of stator blades such as blades 224 and 226. Annular top plate 206 is fixed to top surfaces of the stator blades. The fixing is achieved by means of at least one of welding or securing with bolts. Stator 200 also comprises an annular bottom plate 208. To annular bottom plate 208 is fixed annular array 204 of stator blades. Annular bottom plate 208 is fixed to bottom surfaces of the stator blades. The fixing is achieved by means of at least one of welding or securing with bolts.

In one embodiment of the invention, annular top plate 206, annular array 204 of stator blades and annular bottom plate 208 are integrated. The integration may comprise at least one of welding, securing or attaching with bolts and molding.

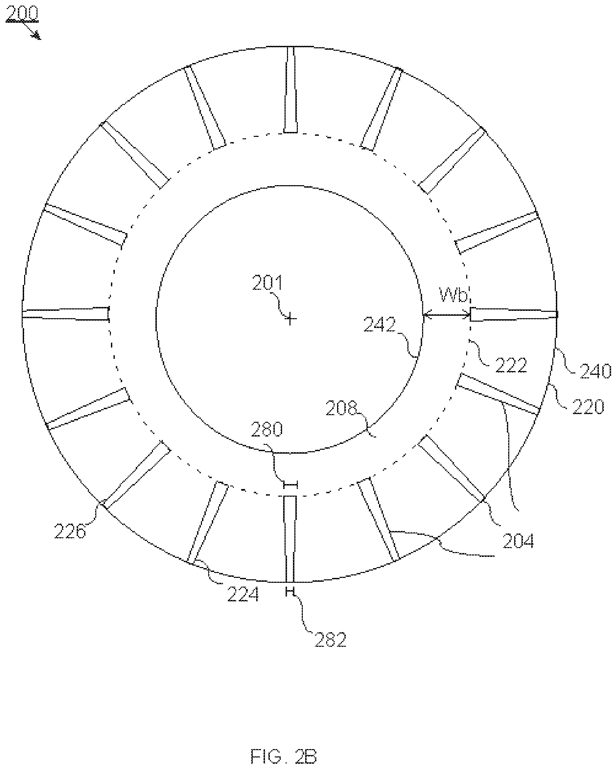

Figure 2B illustrates a top view of the stator of Figure 2A. In Figure 2B annular top plate 206 is removed to reveal annular array 204 of stator blades. Stator 200 has axis 201. Annular array 204 comprises a plurality of stator blades such as stator blade 224 and stator blade 226. Annular array 204 of stator blades has in outer circumference 220 and an inner circumference 222. Stator blades in annular array 204 extend transversely and radially from inner circumference 222 to outer circumference 220. The stator blades in annular array 204 may be equally spaced. Annular array 204 of stator blades is mounted on annular bottom plate 208. Annular bottom plate 208 has an outer circumference 240 and an inner circumference 242. Outer circumference 240 of annular bottom plate 208 may be aligned with outer circumference 220 of annular array of stator blades 204. In Figure 2B a difference between inner circumference 222 of annular array 204 and inner circumference 242 of annular bottom plate 208 is referred to with numeral Wb. The extension of annular bottom plate 208 radially towards axis 201 by width Wb may be referred to as flow adjustor. Therefore, inner circumference 242 of annular bottom plate 208 is smaller than inner circumference 222 of annular array 204. The width Wb may be between 50% and 300% of the length of stator blades in radial direction from inner circumference 222 to outer circumference 220 of annular array 204. The benefit of flow adjustor is to guide slurry into the region of a rotor such as rotor 300 in Figure 3 and to change flow field around the rotor and stator 200 for better mixing and gas dispersion. The effectiveness of suction from opening formed by inner circumference 242 of annular bottom plate into rotor is enhanced. Furthermore, pumping capacity is increased because of enhanced suction intensity. The flow adjustor enhances turbulence in a low region of a flotation tank in which stator 200 is installed. As a result, the mixing and bubble dispersion efficiency is improved. The idea of flow adjustor changes flow pattern and fluid kinetics around stator 200 and a rotor installed in interior region of stator 200.

An opening defined by inner circumference 242 of annular bottom plate 208 guides slurry into the interior space defined by annular array 204 where a rotor such as rotor 300 in Figure 3 may be suspended or otherwise mounted.

Stator blades in annular array 204 subdue swirling flow produced by a rotor thereby forming jet flows in radial direction away from stator 200 and toward the wall in the flotation tank in which stator 200 may be installed. This creates favorable conditions for air bubble dispersion and mixing.

In one embodiment of the invention, blades in annular array 204 are thicker at inner circumference 222 of annular array 204 facing axis 201 than at outer circumference 220 facing away from axis 201. The thicknesses of stator blades at the inner circumference 222 of annular array 204 are illustrated with line 280. The thicknesses of stator blades at the outer circumference 220 of annular array 204 are illustrated with line 282. The difference in the thickness of each stator blade makes the blades stronger at an interior space defined by inner circumference 222 of annular array 204. The flurry currents to which flanks of the blades are subjected to are stronger closer to the interior space.

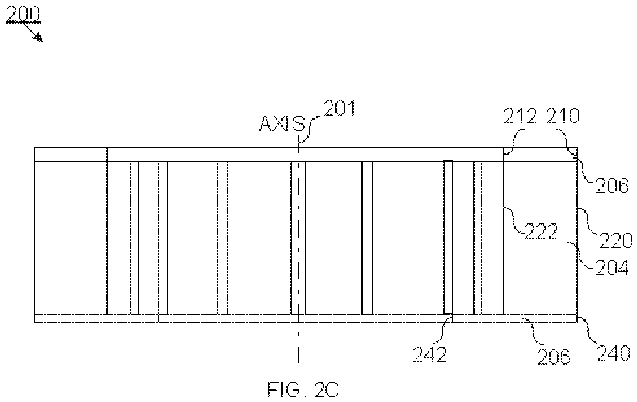

Figure 2C illustrates a lateral section view of the stator of Figure 2A and Figure 2B.

Figure 3 illustrates a rotor in one embodiment of the invention.

In Figure 3 there is illustrated a rotor 300 to be rotated in an interior space defined by an annular top plate of a stator, an annular array of stator blades and an annular bottom plate of a stator. The annular top plate of a stator may be the annular top plate of Figure 1A or Figure 2A. The annular array of stator blades may be annular array of Figures 1A and 2A. The annular bottom plate of a stator may be the annular bottom plate of Figures 1A and 2A. The interior space may be also defined by a cylindrical member, on top of which the annular array of stator blades is mounted. Rotor 300 comprises a rotor annular top plate 310. Rotor annular top plate 310 has an inner circumference which allows an air supply pipe 320 to be fitted in an opening formed by the inner circumference. Air supply pipe 320 is cylindrical and has a conduit 322 for air. Rotor 300 comprises an annular array 312 of rotor blades which extend in transverse direction from an inner circumference of annular array 312 such as rotor blades 302A, 302B, 302C and 302D. Annular array 312 of rotor blades extends radially from an inner circumference of array 312 to an outer circumference of array 312. The inner circumference of array 312 forms a slurry space 304. Annular array 312 of rotor blades extends axially from rotor annular top plate 310. Annular array 312 has an outer circumference which is substantially similar to the outer circumference of rotor annular top plate 310 axially close to the rotor annular top plate 310. Outer circumference of annular array 312 diminishes in the axial direction away from rotor annular top plate 310. The outer circumferences of annular array 312 in axial direction form a curvilinear profile when viewed laterally. Blades in annular array 312 have a curvilinear peripheral configuration and extend from an inner radial location at a first axial end to an outer radial location at a second axial close to annular top plate 310. A collar 330 is fitted to encircle a lower axial portion of slurry space 304. Collar 330 is attached to lower axial portions of blades in array 312. Collar 330 guides slurry from a lower portion of flotation tank (now shown) into slurry space 304. Slurry space 304 is also defined a plurality of slurry space walls 308 each of which have at least one opening 306. Between adjacent rotor blades there may also be openings such as opening 307.

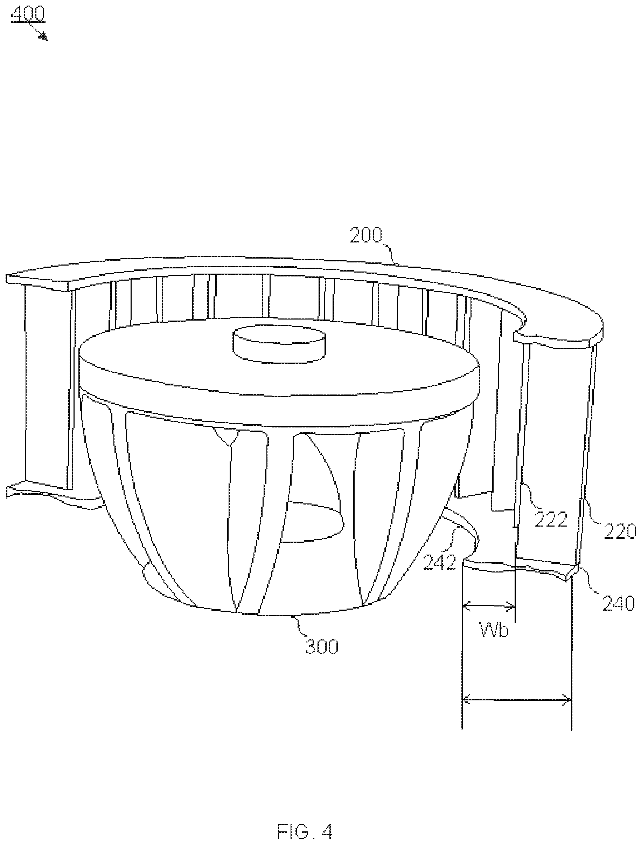

Figure 4 illustrates a rotor and stator arrangement in one embodiment of the invention. The arrangement 400 comprises rotor 300 as described in association with Figure 3 and stator 200 as described in association with Figure 2A. Annular array 204 of stator blades has inner circumference 222 and outer circumference 220. Annular array 204 of stator blades is mounted on an annular bottom plate, which has an outer circumference 240 and an inner circumference 242. Inner circumference 242 of the annular bottom plate is smaller than inner circumference 222 of annular array 204. The difference between inner circumference 242 of the annular bottom plate and inner circumference 222 of annular array 204 of stator blades is illustrated with reference numeral Wb.

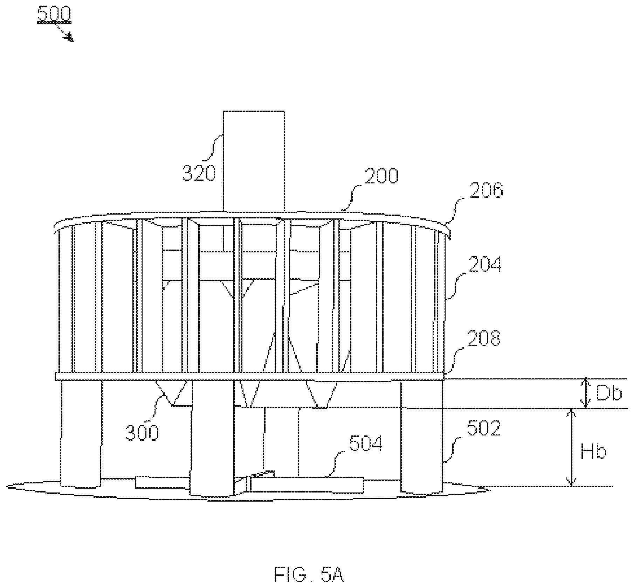

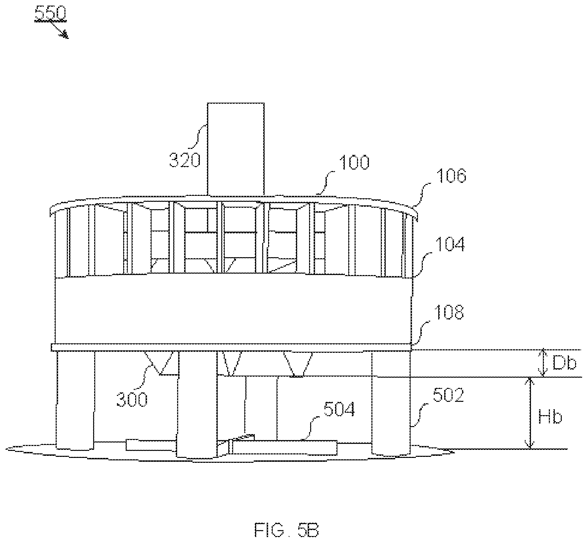

Figure 5A illustrates a rotor-stator assembly 500 in one embodiment of the invention. Rotor-stator assembly 500 comprises rotor 300 as described in association with Figure 3. Rotor-stator assembly 500 also comprises stator 200 as described in association with Figure 2. Stator 200 comprises stator top annular plate 206 mounted on annular array 204 of stator blades. Stator annular array 204 is mounted on annular stator bottom plate 208. Cylinder 320 supplying air to slurry space 304 of rotor 300 is also illustrated in Figure 5. Rotor 300 is mounted inside an interior space defined by annular array 204 of stator blades, stator annular top plate 206 and stator annular bottom plate 208. Rotor 300 is depended via cylinder 320 from a superstructure of the flotation tank (not shown) so that collar 330 protrudes by a depth from stator annular bottom plate 208. A space may be left between rotor 300 and stator 200 which allows vibrations in rotor 300. The depth is referred to using reference numeral Db. The depth may be from 10% to 20% of the height of rotor 300. Stator 200 may be mounted on a plurality of legs such as leg 502. The height at which collar 330 of rotor 300 depends above the bottom of the flotation tank is referred to using reference numeral Hb. Beneath rotor 300 on the bottom of the flotation tank may be attached a vortex breaker 504 coaxial with rotor 300. Vortex breaker may be cruciform.

Figure 5B illustrates a rotor-stator assembly 550, in one embodiment of the invention. In the embodiment described in Figure 5B stator 200 has been replaced with stator 100 of Figure 1A.

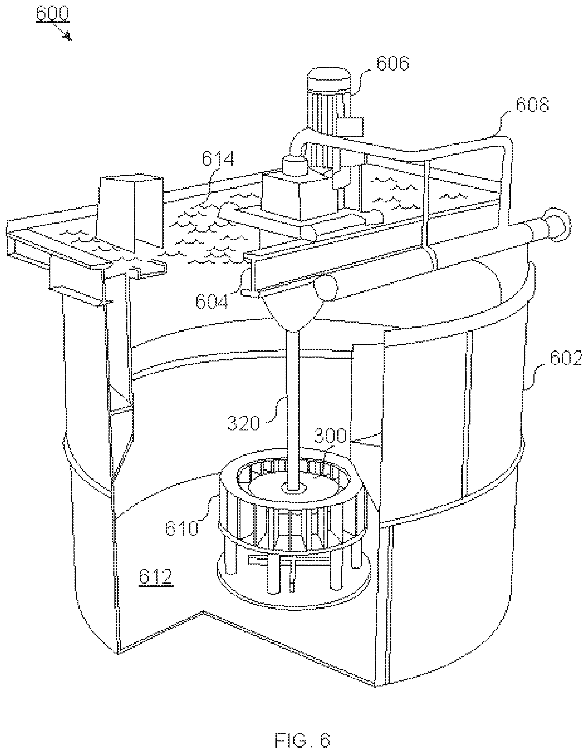

Figure 6 illustrates a flotation tank comprising a stator according to an embodiment of the invention.

In Figure 6 there is illustrated a flotation tank 600. Flotation tank has a cylindrical side wall 602. Flotation tank 600 comprises a superstructure 604 mounted over flotation tank 600, from which rotor 300 depends. Rotor 300 is suspending in a position relative to a stator 610 where a lower portion of rotor 300 protrudes from an opening in stator annular bottom plate, as described in association with in Figure 5. Stator 610 may be stator 100 illustrated in Figure 1A or stator 200 illustrated in Figure 2A. Stator 610 may be mounted on pillars or legs on the bottom of flotation tank 600. On the bottom of flotation tank 600 may be a cruciform vortex breaker coaxial with rotor 300, as illustrated in Figure 5. Rotor 300 aerates slurry 612 in flotation tank. Rotor 300 receives an air supply via hollow pipe 320 and via a pipeline 608 mounted on superstructure 604. Rotor 300 is rotated by motor 606, which may be an electrical motor. Rotation of rotor blades in rotor 300 cause a pumping effect and a suction of slurry 612 through collar 330 into slurry space 304 within rotor 300. Slurry 612 becomes aerated in slurry space 304 because of incoming air flow into rotor 300 via hollow pipe 320. Aerated slurry escapes from slurry space 304 due to increasing pressure in slurry space 304 and incoming slurry flow via collar 330. Aerated slurry escapes through openings in slurry space walls 308 such as openings 306 and 307. Escaped aerated slurry reaches stator blades of the annular array of stator blades which remove a rotational component from aerated slurry flow. Stator blades of stator 610 also cause a shearing action in relation to rotor blades of rotor 300 which yields small-sized bubbles. Aerated slurry exits as radial jets spaces between stator blades in annular array of stator blades. Bubbles, to the surfaces of which valuable mineral is attached, travel towards a surface of liquid in flotation tank 600. Bubbles from a layer of froth 614 which may be recovered from the surface.

The embodiments of the invention described hereinbefore may be used in any combination with each other. At least two of the embodiments may be combined together to form a further embodiment of the invention. A flotation tank, a rotor-stator assembly or a stator to which the invention is related may comprise at least one of the embodiments of the invention described hereinbefore.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A stator (100) of a gas dispersion mechanism to be used in a froth flotation tank (600), the stator comprising:
an annular top plate (106) having an inner circumference;
an annular array (104) comprising a plurality of radial stator blades (124, 126), each stator blade having an inner edge and an outer edge, the inner edges of the stator blades defining an interior space for a rotor, inner edges of at least two stator blades of the plurality of stator blades defining an inner circumference (122) of the annular array (104), the at least two stator blades (124, 126) having innermost inner edges among the plurality of stator blades, the annular array (104) being disposed below the annular top plate (106) and being coaxial with the annular top plate; and
an annular bottom plate (108) disposed below the annular array (104), the annular bottom plate being coaxial with the annular array, the annular bottom plate having an inner circumference (142), the inner circumference of the annular bottom plate having a radius which is smaller than a radius of the inner circumference (122) of the annular array (104), the difference (Wb) between the radius of the inner circumference of the annular bottom plate and radius of the inner circumference of the annular array forming a flow guide for guiding a flow of slurry (612) towards an axis (101) of the annular bottom plate; **characterized in that** the stator (100) comprises a cylindrical member (102) disposed between the annular array (104) and the annular bottom plate (108), the cylindrical member being coaxial with the annular array, and having a height from 50% to 150% of a height of the annular array.

2. The stator according to claim 1, wherein the inner circumference (122) of the annular array (104) is substantially similar to the inner circumference (132) of the cylindrical member (102).

3. The stator according to claim 1, wherein the outer circumference (120) of the annular array (104) is substantially similar to the outer circumference (130) of the cylindrical member (102).

4. The stator according to any of the claims 1 3 4, wherein a radius of the outer circumference (110) of the annular top plate (106) is from 20% to 45% larger than a radius of the outer circumference (120) of the annular array (104).

5. The stator according to any of the claims 1 - 4, wherein a thickness of stator blades (124, 126) decreases in radial direction from a maximum thickness (180) at the inner circumference (122) of the annular array (104) to a minimum thickness (182) at the outer circumference (120) of the annular array (104).

6. The stator according to any of the claims 1 - 5, wherein the stator blades (124, 126) have a rectangular edge facing an axis of the annular array (104) .

7. The stator according to any of the claims 1 - 6, wherein the stator (100) depends from a superstructure (604) of the froth flotation tank (600).

8. The stator according to any of the claims 1 - 6, wherein the stator is mounted on a plurality of support bars (502) standing on a bottom of the froth flotation tank (600).

9. The stator according to any of the claims 1 - 8, wherein a width of the flow guide is from 20% to 80% of the width of the annular array (104).

10. A rotor-stator assembly (400) of a gas dispersion mechanism to be used in a froth flotation tank, the rotor-stator assembly comprising:
a stator according to any of the claims 1 - 9;
a rotor (300) comprising a plurality of rotor blades (302A-D) defining an interior space of the rotor, the rotor comprising an rotor top plate (310) having an aperture for gas supply to the interior space, the rotor top plate being disposed above the plurality of rotor blades, the rotor being coaxial with the annular top plate, the rotor being positioned to protrude a depth (Db) from an opening formed by the inner circumference (142) of the annular bottom plate (108).

11. The rotor-stator assembly according to claim 10, wherein the rotor (300) comprises an annular collar (330) for an inward flow of slurry, the annular collar being disposed below the plurality of rotor blades (302A-D).

12. The rotor-stator assembly according to claim 10, wherein the depth of protrusion (Db) is from 5% to 50% of a height of the rotor (300).

13. A froth flotation tank (600) comprising the rotor stator assembly (400) according to claims 10 - 12.

## Patentansprüche

1. Stator (100) eines Gasdispersionsmechanismus zur Verwendung in einem Schaumflotationstank (600), wobei der Stator
eine ringförmige Deckplatte (106) mit einem Innenumfang;
eine Ringanordnung (104) mit einer Vielzahl von radialen Statorschaufeln (124, 126), wobei jede Statorschaufel eine Innenkante und eine Außenkante hat, die Innenkanten der Statorschaufeln einen Innenraum für einen Rotor begrenzen, Innenkanten von mindestens zwei Statorschaufeln der Vielzahl von Statorschaufeln einen Innenumfang (122) der Ringanordnung (104) begrenzen, die mindestens zwei Statorschaufeln (124, 126) von der Vielzahl von Statorschaufeln innerste Innenkanten haben, die Ringanordnung (104) unterhalb von der ringförmigen Deckplatte (106) angeordnet ist und koaxial mit der ringförmigen Deckplatte ist; und
eine ringförmige Bodenplatte (108) hat, die unterhalb von der Ringanordnung (104) angeordnet ist, wobei die ringförmige Bodenplatte koaxial mit der Ringanordnung ist, die ringförmige Bodenplatte einen Innenumfang (142) hat, der Innenumfang der ringförmigen Bodenplatte einen Radius hat, welcher kleiner ist als ein Radius des Innenumfangs (122) der Ringanordnung (104), die Differenz (Wb) zwischen dem Radius des Innenumfangs der ringförmigen Bodenplatte und einem Radius des Innenumfangs der Ringanordnung eine Strömungsführung zum Führen von einer Strömung einer Suspension (612) in Richtung einer Achse (101) der ringförmigen Bodenplatte; **dadurch gekennzeichnet, dass**
der Stator (100) ein zylindrisches Element (102) hat, das zwischen der Ringanordnung (104) und der ringförmigen Bodenplatte (108) angeordnet ist, das zylindrische Element koaxial mit der Ringanordnung ist und eine Höhe von 50 % bis 150 % von einer Höhe der Ringanordnung hat.

2. Stator nach Anspruch 1, wobei der Innenumfang (122) der Ringanordnung (104) im Wesentlichen gleich dem Innenumfang (132) des zylindrischen Elements (102) ist.

3. Stator nach Anspruch 1, wobei der Außenumfang (120) der Ringanordnung (104) im Wesentlichen gleich dem Außenumfang (130) des zylindrischen Elements (102) ist.

4. Stator nach einem der Ansprüche 1, 3 oder 4, wobei ein Radius des Außenumfangs (110) der ringförmigen Deckplatte (106) zwischen 20 % und 45 % größer ist als ein Radius des Außenumfangs (120) der Ringanordnung (104).

5. Stator nach einem der Ansprüche 1-4, wobei eine Dicke der Statorschaufeln (124, 126) in einer Radialrichtung von einer Maximaldicke (180) bei dem Innenumfang (122) der Ringanordnung (104) zu einer Minimaldicke (182) bei dem Außenumfang (120) der Ringanordnung (104) abnimmt.

6. Stator nach einem der Ansprüche 1-5, wobei die Statorschaufeln (124, 126) eine rechteckige Kante haben, die einer Achse der Ringanordnung (104) zugewandt ist.

7. Stator nach einem der Ansprüche 1-6, wobei der Stator (100) von einem Überbau (604) des Schaumflotationstanks (600) herabhängt.

8. Stator nach einem der Ansprüche 1-6, wobei der Stator an einer Vielzahl von Stützstreben (502) montiert ist, die auf einem Boden des Schaumflotationstanks (600) stehen.

9. Stator nach einem der Ansprüche 1-8, wobei eine Breite der Strömungsführung zwischen 20 % und 80 % der Breite der Ringanordnung (104) beträgt.

10. Rotor/Stator-Baugruppe (400) eines Gasdispersionsmechanismus zur Verwendung in einem Schaumflotationstank, wobei die Rotor/Stator-Baugruppe
einen Stator nach einem der Ansprüche 1-9; und
einen Rotor (300) hat, der eine Vielzahl von Rotorschaufeln (302A-D) aufweist, die einen Innenraum des Rotors begrenzen, wobei der Rotor eine Rotordeckplatte (310) aufweist, die eine Mündung für eine Gaszufuhr zu dem Innenraum hat, wobei die Rotordeckplatte oberhalb von der Vielzahl von Rotorschaufeln angeordnet ist, der Rotor koaxial mit der ringförmigen Deckplatte ist, der Rotor positioniert ist, sodass er um eine Tiefe (Db) von einer Öffnung vorsteht, die durch den Innenumfang (142) der ringförmigen Bodenplatte (108) ausgebildet ist.

11. Rotor/Stator-Baugruppe nach Anspruch 10, wobei der Rotor (300) einen ringförmigen Kranz (330) für eine einwärtsgerichtete Strömung von einer Suspension hat und der ringförmige Kranz unterhalb von der Vielzahl von Rotorschaufeln (302A-D) angeordnet ist.

12. Rotor/Stator-Baugruppe nach Anspruch 10, wobei die Vorsprungstiefe (Db) zwischen 5 % und 50 % von einer Höhe des Rotors (300) beträgt.

13. Schaumflotationstank (600), mit der Rotor/Stator-Baugruppe (400) nach einem der Ansprüche 10-12.

## Revendications

1. Un stator (100) d'un mécanisme de dispersion de gaz destiné à être utilisé dans un réservoir de flottation par mousse (600), le stator comprenant:
une plaque supérieure annulaire (106) ayant une circonférence interne;
un réseau annulaire (104) comprenant une pluralité d'aubes radiales de stator (124, 126), chaque aube de stator ayant un bord intérieur et un bord extérieur, les bords intérieurs des aubes de stator définissant un espace intérieur pour un rotor, des bords intérieurs d'au moins au moins deux aubes de stator de la pluralité d'aubes de stator définissant une circonférence intérieure (122) du réseau annulaire (104), les au moins deux aubes de stator (124, 126) ayant des bords intérieurs les plus à l'intérieur parmi la pluralité des aubes de stator, le réseau annulaire (104) étant disposé en dessous de la plaque supérieure annulaire (106) et étant coaxial à la plaque supérieure annulaire; et
une plaque inférieure annulaire (108) disposée au-dessous du réseau annulaire (104), la plaque inférieure annulaire étant coaxiale au réseau annulaire, la plaque inférieure annulaire ayant une circonférence intérieure (142), la circonférence intérieure de la plaque inférieure annulaire ayant un rayon qui est inférieure à un rayon de la circonférence intérieure (122) du réseau annulaire (104), la différence (Wb) entre le rayon de la circonférence interne de la plaque inférieure annulaire et le rayon de la circonférence intérieure du réseau annulaire formant un guide d'écoulement pour guider un écoulement de suspension (612) vers un axe (101) de la plaque inférieure annulaire; **caractérisé en ce que** le stator (100) comprend un élément cylindrique (102) disposé entre le réseau annulaire (104) et la plaque inférieure annulaire (108), le membre cylindrique étant coaxial avec le réseau annulaire, et ayant une hauteur allant de 50% à 150% de la hauteur du réseau annulaire.

2. Le stator selon la revendication 1, dans lequel la circonférence intérieure (122) du réseau annulaire (104) est substantiellement similaire à la circonférence intérieure (132) du membre cylindrique (102).

3. Le stator selon la revendication 1, dans lequel la circonférence extérieure (120) du réseau annulaire (104) est substantiellement similaire à la circonférence extérieure (130) du membre cylindrique (102).

4. Le stator selon l'une quelconque des revendications 1 3 4, dans lequel un rayon de la circonférence extérieure (110) de la plaque supérieure annulaire (106) est de 20% à 45% plus grand qu'un rayon de la circonférence extérieure (120) du réseau annulaire (104).

5. Le stator selon l'une quelconque des revendications 1 - 4, dans lequel une épaisseur d'aubes de stator (124, 126) diminue dans la direction radiale à partir d'une épaisseur maximale (180) au niveau de la circonférence intérieure (122) du réseau annulaire (104) à une épaisseur minimale (182) à la circonférence extérieure (120) du réseau annulaire (104).

6. Le stator selon l'une quelconque des revendications 1 - 5, dans lequel les aubes de stator (124, 126) ont un bord rectangulaire faisant face à un axe du réseau annulaire (104).

7. Le stator selon l'une quelconque des revendications 1 - 6, dans lequel le stator (100) dépend d'une superstructure (604) du réservoir de flottation par mousse (600).

8. Le stator selon l'une quelconque des revendications 1 - 6, dans lequel le stator est monté sur une pluralité de barres de support (502) reposant sur un fond du réservoir de flottation par mousse (600).

9. Le stator selon l'une quelconque des revendications 1 - 8, dans lequel une largeur du guide d'écoulement est de 20% à 80% de la largeur du réseau annulaire (104).

10. Un assemblage rotor-stator (400) d'un mécanisme de dispersion de gaz destiné à être utilisé dans un réservoir de flottation par mousse, l'assemblage rotor-stator comprenant:
un stator selon l'une quelconque des revendications 1 - 9;
un rotor (300) comprenant une pluralité de pales de rotor (302A-D) définissant un espace intérieur du rotor, le rotor comprenant une plaque supérieure de rotor (310) ayant une ouverture pour l'alimentation en gaz vers l'espace intérieur, la plaque supérieure de rotor étant disposées au-dessus de la pluralité de pales de rotor, le rotor étant coaxial avec la plaque supérieure annulaire, le rotor étant positionné pour dépasser d'une profondeur (Db) à partir d'une ouverture formée par la circonférence intérieure (142) de la plaque intérieure annulaire (108).

11. L'assemblage rotor-stator selon la revendication 10, dans lequel le rotor (300) comprend un collet annulaire (330) pour un écoulement de suspension vers l'intérieur, le collet annulaire étant disposé en dessous de la pluralité de pales de rotor (302A-D).

12. L'assemblage rotor-stator selon la revendication 10, dans lequel la profondeur de saillie (Db) est de 5% à 50% de la hauteur du rotor (300).

13. Un réservoir de flottation par mousse (600) comprenant l'assemblage rotor stator (400) selon les revendications 10 - 12.
